# EUROPÄISCHE PATENTANMELDUNG

(11) **EP 1 327 545 A2**
(43) Veröffentlichungstag der Anmeldung: **16.07.2003**
(21) Anmeldenummer: 02028458.4
(22) Anmeldetag: 19.12.2002
(51) Int. Cl.: B60J 5/04

(54) **Fahrzeugtür bzw. -klappe**

(30) Priorität: 10.01.2002 DE 10200516
(71) Anmelder: DaimlerChrysler AG, 70567 Stuttgart (DE)
(72) Erfinder: Elsner, Hans, 76287 Rheinstetten (DE); Füller, Karl-Heinz, Dr., 89231 Neu-Ulm (DE); Haug, Tilman, Dr., 89264 Weissenhorn (DE)

(57) **Zusammenfassung**

Die Erfindung betrifft eine Fahrzeugtür bzw. -klappe (1), insbesondere an Kraftfahrzeugen, wobei als Tragstruktur ein aus Profilteilen (3-6) bzw. -zuschnitten und Verbindern (6-12) modular zusammengesetzter Rahmen (2) mit zumindest einem als Beschlag bzw. Halterung eines Beschlages und/oder An- bzw. Einbauteiles der Tür ausgebildeten Verbinder vorgesehen ist.

## Beschreibung

Die Erfindung betrifft eine Fahrzeugtür bzw. -klappe, insbesondere für Kraftfahrzeuge, mit einem als Tragstruktur der Tür bzw. Klappe ausgebildeten, von einer Außen- und/oder Innenverkleidung gesonderten Rahmen und daran angeordneten bzw. anbringbaren Beschlägen.

Eine derartige Fahrzeugtür ist Gegenstand der DE 94 14 798 U1. Nach dieser Druckschrift sollen die Türen eines Kraftfahrzeuges eine Tragstruktur in Form eines U-förmigen Rahmens aufweisen, der aus Hohlprofilen, vorzugsweise gebauten Hohlprofilen, besteht und dessen U-Enden durch einen Längsträger am unteren Fensterrand der Tür miteinander verbunden sind. An diesem Rahmen sollen die Türscharniere und ein Aggregateträger angeordnet werden, welcher einerseits als Tragteil für Einbauteile der Tür, insbesondere Fensterheberaggregate und dgl., und andererseits als Halterung für die Außen- und Innenschalen der Tür ausgebildet ist.

Aus der DE 195 37 504 A1 ist eine Fahrzeugtür mit einem der Türkontur entsprechenden, als tiefgezogenes Blechteil ausgebildeten Rahmen bekannt, welcher auf seiner Außen- und Innenseite mit Außen- und Innenschalenteilen verkleidet wird. Zur Verminderung der Unfallfolgen bei einem Seitenaufprall des Fahrzeuges wird der Türrahmen mit einem Seitenaufprallblech versehen, welches auch als Träger von Einbauaggregaten, insbesondere Türheberaggregaten, dient.

Gemäß der DE 198 48 633 A1 wird bei einer Fahrzeugtür ein die Türkontur vorgebender Rahmen aus Aluminium-Profilen vorgesehen, welcher im Bereich des unteren Fensterrandes mit einer Traverse verstärkt und im übrigen mit einer Türaußenwand und einer Türinnenverkleidung versehen wird, wobei die Türinnenverkleidung durch eine Gerüststruktur versteift und als Aggregateträger für Einbauteile der Tür ausgebildet ist.

Die DE 32 39 370 C2 zeigt die Möglichkeit, bei einer aus Tiefziehteilen gebauten selbsttragenden Tür eines Kraftfahrzeuges einen als Innenteil der Tür dienenden standardisierten Aggregateträger zur Halterung von Einbauteilen, insbesondere eines Türheberaggregates, vorzusehen.

Aufgabe der Erfindung ist es nun, die Herstellungskosten einer Fahrzeugtür durch möglichst weitgehende Standardisierung der Tragstruktur zu vermindern.

Diese Aufgabe wird erfindungsgemäß bei einer Fahrzeugtür bzw. -klappe der eingangs angegebenen Art dadurch gelöst, daß der Rahmen aus Profilteilen bzw. -zuschnitten und Verbindern modular zusammengesetzt und zumindest ein Verbinder als Beschlag bzw. Halterung eines Beschlages und/oder Ein- bzw. Anbauteiles ausgebildet ist.

Die Erfindung beruht auf dem allgemeinen Gedanken, für äußerlich unterschiedliche Fahrzeugtüren bzw. -klappen gleiche bzw. hinsichtlich wesentlicher Module gleiche Rahmen vorzusehen und die An- bzw. Einbauteile der Tür oder Klappe unmittelbar am Rahmen anzuordnen. Damit dient der Rahmen einerseits als Tragstruktur der Tür bzw. Klappe und andererseits als Aggregateträger, welcher mit den zugehörigen Aggregaten und Beschlägen vorgefertigt werden kann, ohne damit bereits die Form oder Baureihe der Tür oder Klappe endgültig zu präjudizieren.

Gemäß einer bevorzugten Ausbildung der Erfindung können die Verbinder als Scharniere bzw. Scharnierträger und/oder als Schlossaufnahme der Tür ausgebildet sein.

Des weiteren können die Verbinder, welche gegebenenfalls auch zwischen zwei etwa geradlinig aneinander anschließenden Rahmenteilen und/oder als Verbindungsknoten zwischen mehr als zwei Rahmenteilen angeordnet sein können, zumindest teilweise als Befestigungsflansche für Einbauteile, insbesondere Fensterheber, Fensterführungen od.dgl., ausgebildet sein.

Unabhängig von der Ausbildung des Rahmens kann vorgesehen sein, Fensterführungen mit veränderbarem Abstand voneinander anzuordnen, um bei der Gestaltung der Fenster eine größere Freiheit bzw. die Möglichkeit zu erhalten, ohne konstruktive Abänderungen verschiedene Fensterformen möglich zu machen.

Hinsichtlich einer kostengünstigen Herstellung ist es besonders vorteilhaft, die Verbinder durch Eingießen der Profilteile bzw. -zuschnitte zu erzeugen. Damit genügt ein einziger Gießvorgang, um einerseits die Verbinder herzustellen und andererseits die den Rahmen bildenden Profilteile bzw. -zuschnitte miteinander zu verbinden.

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung näher beschrieben wird.

Dabei zeigt
- Fig. 1: eine Seitenansicht einer ersten Ausführungsform eines Türrahmens, wobei die Kontur der Tür strichliert dargestellt ist,
- Fig. 2: eine perspektivische Darstellung einer Rahmenecke und
- Fig. 3: ein Beispiel eines Türrahmens, bei dem einerseits Eckverbinder zwischen zwei Rahmenteilen und andererseits Verbinder zwischen drei Rahmenteilen, von denen zwei geradlinig aneinander anschließen, vorgesehen sind.

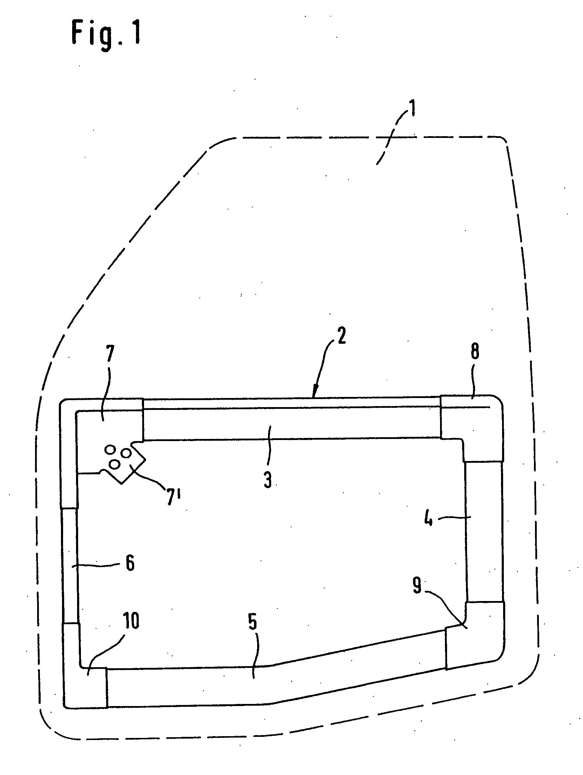

Gemäß Fig. 1 besitzt eine Tür 1 eines Kraftfahrzeuges, von der lediglich die Kontur strichliert dargestellt ist, einen als Tragstruktur ausgebildeten Rahmen 2, dessen Rahmenglieder 3 bis 6 aus Profilteilen bzw. -zuschnitten, insbesondere aus Strangpressprofilteilen oder -zuschnitten, bestehen und an den Rahmenecken über Verbinder 7 bis 10 miteinander fest verbunden sind.

Die Verbinder 7 bis 10 sind vorzugsweise als Gußteile ausgebildet, die in besonders zweckmäßiger Weise dadurch hergestellt werden, daß die Rahmenglieder 3 bis 6 eingegossen werden, d.h. die Rahmenglieder 3 bis 6 werden derart in ein Werkzeug bzw. Werkzeuge eingespannt bzw. eingelegt, daß sich die Verbinder 7 bis 10 unter gleichzeitiger Befestigung an den Rahmengliedern 3 bis 6 gußtechnisch erzeugen lassen.

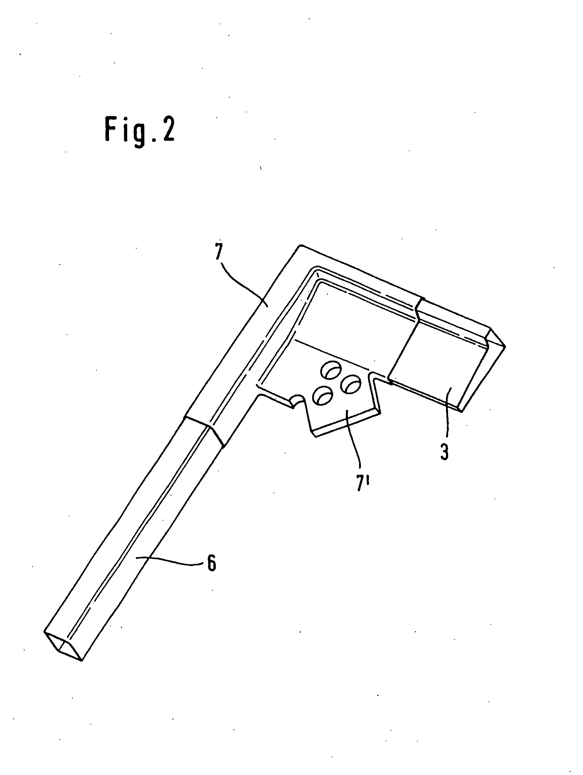

Wie insbesondere die Fig. 2 zeigt, können die Rahmenglieder, im Beispiel der Fig. 2 die Rahmenglieder 3 und 6, voneinander abweichende Profilformen, insbesondere Hohlprofilformen, aufweisen. In Fig. 2 ist das Rahmenglied 3 als hohles Winkelprofil ausgebildet, während das Rahmenglied 6 rechtwinkligen Querschnitt hat.

Statt dessen sind jedoch auch andere, insbesondere auch offene Profile oder Profile mit offenen Profilkanälen geeignet.

Die Verbinder 7 bis 10 sind erfindungsgemäß zumindest teilweise als Beschlagteile ausgebildet, beispielsweise besitzt der Verbinder 7 einen Flansch 7', welcher sich zur Befestigung eines Fensterhebermotors od.dgl. nutzen läßt.

Des weiteren sind die Verbinder 7 und 10 auf ihrer in Fig. 1 nach links weisenden Randseite mit vorgefertigten bzw. vorbereiteten Bohrungen zur Aufnahme von Befestigungselementen für Scharnierteile versehen, mit denen sich die Tür 1 an der nicht dargestellten Karosserie des Fahrzeuges gelenkig anschlagen läßt.

Entsprechende Bohrungen können am Verbinder 8 zur Anordnung eines Schlosses bzw. einer Schlossaufnahme vorgesehen sein.

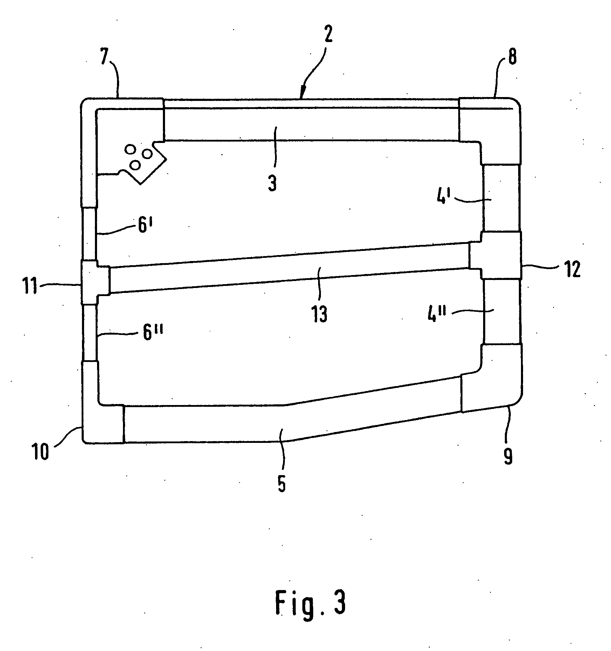

Aus Fig. 3 ist ersichtlich, daß der Rahmen 2 gegebenenfalls auch eine Untergliederung in mehrere Rahmenfelder aufweisen kann.

Im Beispiel der Fig. 3 sind die vertikalen Rahmenglieder in die Abschnitte 4' und 4" bzw. 6' und 6" unterteilt, wobei zwischen diesen Abschnitten weitere Verbinder 11 und 12 angeordnet sind, die untereinander durch eine Traverse 13 verbunden sind, durch die der Rahmen 2 bei einem Seitenaufprall wirksam versteift wird.

Grundsätzlich gilt, daß die Form des Rahmens 2 von der Kontur der Tür 1 relativ große Abweichungen aufweisen kann, da auch bei sehr unterschiedlichen Türformen die Türscharniere sowie das Schloss relativ zueinander eine vorgegebene Lage behalten können. Damit kann in der Regel die Form des Rahmens 2 unverändert bleiben.

Gleichwohl ist es denkbar, daß verschiedene Versionen des Rahmens 2 gefertigt werden müssen, um unterschiedliche Türlängen oder -breiten oder sonstige Türabmessungen berücksichtigen zu können. Hier bietet nun die Erfindung den großen Vorteil, daß unterschiedliche Rahmengrößen ohne wesentliche Abänderungen des Rahmens 2 herstellbar sind. Beispielsweise lassen sich die Rahmenglieder 3 und 5 und/oder die Rahmenglieder 4 und 6 mit unterschiedlichen Längen zuschneiden, so daß Rahmen 2 unterschiedlicher Größe erzeugt werden können, wobei die Herstellungsprozesse und/oder die Verbinder 7 bis 12 unverändert bleiben können.

Die am Rahmen 2 angeordneten Fensterführungen (nicht dargestellt) sind vorzugsweise so ausgebildet, daß sich ihre Abstände zur Anpassung an unterschiedliche Fenstergrößen oder -formen verändern lassen.

Die Verbinder 7 bis 12 können unter anderem auch durch Druckguß oder Spritzguß hergestellt werden, wobei die Herstellung sowohl aus Metall als auch aus Kunststoff möglich ist.

Weitere mögliche Herstellungsverfahren sind Thixocasting und Squeezecasting.

Abweichend von den zeichnerisch dargestellten Ausführungen kann auch vorgesehen sein, die vertikalen Rahmenglieder 4 und/oder 6, vgl. Fig. 1, und die zugeordneten Verbinder 8 und 9 bzw. 7 und 10 je in einem Guß herzustellen, vorzugsweise unter Einbindung der Rahmenglieder 3 und 5.

In entsprechender Weise können die Rahmenglieder 4' und 4" und/oder 6' und 6", vgl. Fig. 3, in einem Guß mit den Verbindern 8,9 und 12 bzw. 7,10 und 11 hergestellt werden, vorzugsweise unter Einbindung der Rahmenglieder 3,5 und 13.

## Patentansprüche

1. Fahrzeugtür bzw. -klappe (1), insbesondere für Kraftfahrzeuge, mit einem als Tragstruktur der Tür bzw. Klappe ausgebildeten, von einer Außen- und/oder Innenverkleidung gesonderten Rahmen (2) und daran angeordneten bzw. anbringbaren Beschlägen,
**dadurch gekennzeichnet,**
**daß** der Rahmen (2) aus Profilteilen (3 bis 6, 4', 4", 6', 6") bzw. -zuschnitten und Verbindern (6 bis 12) modular zusammengesetzt und zumindest ein Verbinder als Beschlag bzw. Halterung eines Beschlages und/oder Ein- oder Anbauteiles ausgebildet ist.

2. Fahrzeugtür bzw. -klappe nach Anspruch 1,
**dadurch gekennzeichnet,**
**daß** zumindest ein Verbinder als Scharnier bzw. Scharnierträger ausgebildet ist.

3. Fahrzeugtür bzw. -klappe nach Anspruch 1 oder 2,
**dadurch gekennzeichnet,**
**daß** zumindest ein Verbinder als Schlossaufnahme bzw. Träger einer Schlossaufnahme ausgebildet ist.

4. Fahrzeugtür bzw. -klappe nach einem der Ansprüche 1 bis 3,
**dadurch gekennzeichnet,**
**daß** zumindest ein Verbinder einen Befestigungsflansch (7') aufweist.

5. Fahrzeugtür bzw. -klappe nach Anspruch 4,
**dadurch gekennzeichnet,**
**daß** der Befestigungsflansch (7') parallel zur Rahmenebene angeordnet ist.

6. Fahrzeugtür bzw. -klappe nach einem der Ansprüche 1 bis 5,
**dadurch gekennzeichnet,**
**daß** der Rahmen (2) mit Fensterführungen bzw. Fensterführungsträgern versehen ist.

7. Fahrzeugtür bzw. -klappe nach Anspruch 6,
**dadurch gekennzeichnet,**
**daß** die Fensterführungen bzw. Fensterführungsträger Teile von Verbindern (6 bis 12) sind.

8. Fahrzeugtür bzw. -klappe nach Anspruch 6 oder 7,
**dadurch gekennzeichnet,**
**daß** die Fensterführungen verstellbar sind.

9. Fahrzeugtür bwz. -klappe nach einem der Ansprüche 1 bis 8,
**dadurch gekennzeichnet,**
**daß** die Verbinder (6 bis 12) zumindest teilweise durch Eingießen der Profilteile bzw. -zuschnitte erzeugt sind.

10. Fahrzeugtür bzw. -klappe nach einem der Ansprüche 1 bis 9,
**dadurch gekennzeichnet,**
**daß** die vertikalen Rahmenglieder (4,6,4',4",6',6") zumindest teilweise mit zugeordneten Verbindern (8,9;7,10;8,9,12;7,10,11) in einem Guß vorzugsweise unter Einbindung zumindest eines horizontalen Rahmengliedes (3,5,13) hergestellt sind.

11. Verfahren zur Herstellung einer Fahrzeugtür bzw. -klappe nach einem der Ansprüche 1 bis 10,
**dadurch gekennzeichnet,**
**daß** für unterschiedliche Türformen gleiche Rahmen (2) oder gleichartige Rahmen mit unterschiedlich zugeschnittenen Profilteilen (3 bis 6,4',4",6',6") verwendet werden.
